# EUROPEAN PATENT APPLICATION

(11) **EP 0 639 017 A2**
(43) Date of publication of application: **15.02.1995**
(21) Application number: 94830392.0
(22) Date of filing: 29.07.1994
(51) Int. Cl.: H04M 1/00, H04M 3/42

(54) **Service selection system for multifunction telephone set and light indicator of the call warning signal**

(30) Priority: 11.08.1993 IT RM930550
(71) Applicant: CIRTE MANIFATTURIERA S.p.A., I-80133 Napoli (IT)
(72) Inventor: Michelotti, Guido, I-00143 Roma (IT)
(74) Representative: Fiammenghi-Domenighetti, Delfina

(57) **Abstract**

A system for selecting the functions provided by a telephone set by combining each service with only one specific control operation. Such control operation actuates a succession of already stored codes which are detected by a call handling block (4). A light indicator is further provided relating to call warning service.

## Description

This invention relates to a multifunction telephone set and more particularly to a system for selecting the functions provided by a telephone set allowing a specific service to be activated in an easier, then "friendly" way to the user. Such simplification as well as the greater reliability is obtained through a selection system using only one control operation (for example, the keystroke of a specific key) for actuating the corresponding function.

The provision of digital exchanges in the telephone network by SIP (the Italian Phone Service Company) offers to the users a large range of additional phone services which could not be provided by the old electromechanical exchanges which are on the way of full extinction.
Some services are at present offered to the applicant, and namely:
- call warning;
- call transfer;
- direct distance dialling block;
- remote counter readout.
When the user enabled to the additional phone services wants to select one of the above-mentioned services, he can strike the keys of the keyboard of a telephone set capable of emitting multifrequency tones, thus generating a complicated succession of codes and symbols (* and #); in this way the requested service is made available by the telephone exchange.
The described operations make the use of the telephone set and the access to the additional services offered to the digital exchange very complex. Therefore, there is the need of simplifying the use of the telephone set to the advantage of the user and the Phone Service Company as well.
Furthermore, as far as the call warning service is specifically concerned, it is activated by an exchange signal of 425 Hz and -15 dB; such signal having a typical frequency of the voice band could be detected in a voice signal containing such frequency, thus providing an unwanted activation of the service.

The present invention seeks to provide a system for selecting the functions provided by a telephone set by combining each requested service with only one specific control operation (for example, a keystroke of a key).

A further object of the present invention is of providing a system for selecting the functions provided by the telephone set which allows the plurality of services offered by the telephone set to remain unchanged as well as the operations relating to the selection of a specific service to be generally simplified.

Still another object of the present invention is of providing a system for selecting the functions provided by the telephone set which is of easy construction and low cost.

A further object of the present invention is of providing a system for selecting the functions provided by the telephone set which allows the undue activation of the call warning service by a voice signal of the user at a frequency of about 425 Hz to be avoided, and the actual warning of the further call to be displayed by LEDs.

These and other objects which will be more clearly apparent thereafter are achieved by a selection system for a multi-function telephone set, wherein each available service is associated to only one specific control operation as well as one specific non-volatile memory in which the successions of codes relative to the actuation of the corresponding service are stored. Therefore, the complex successions of codes which are at present keystruck by the user directly on the keyboard of a telephone set capable of emitting multifrequency tones is generated by keystroking only one key followed by the retrieval of the corresponding information from the relative non-volatile memory.

In order to better explain the invention without limiting its general field of application, the selection system according to the invention is described on the basis of preferred embodiments thereof with reference to the accompanying drawings, in which:
Fig. 1 is a block diagram relating only to those parts of a telephone set which are involved in the handling of the service selection signals;
Fig. 2 is an electric diagram of block 3 of Fig. 1.

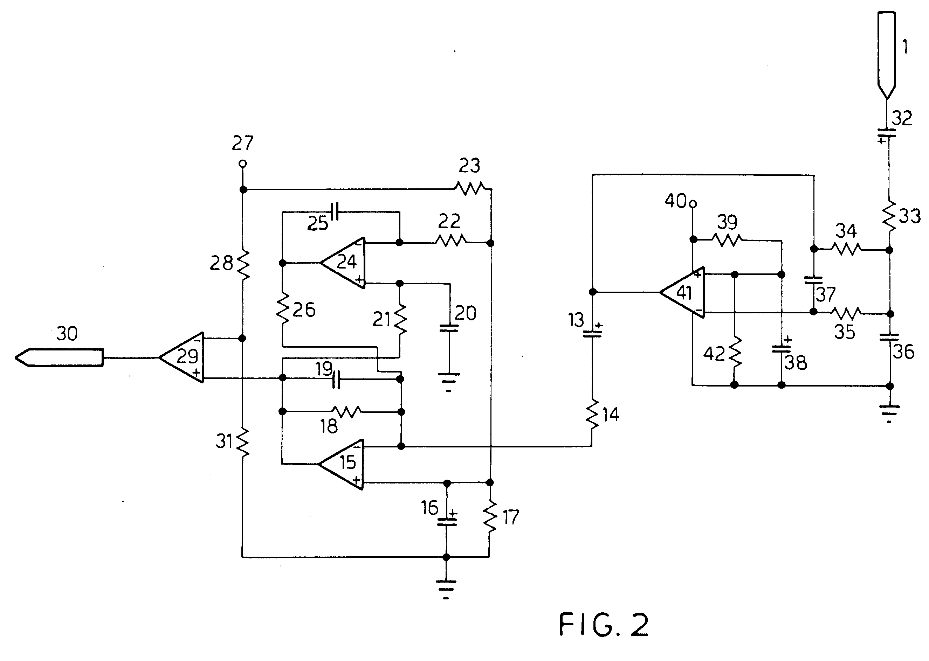

It should be noted that the block diagram does not show any components in detail as the latter are well known to those skilled in the telephony field, and the reference to the following four services:
- call warning,
- call transfer,
- direct distance dialling block,
- remote counter readout,
provided by the telephone set is originated from the present standard services provided by the Italian Phone Service Company. As mentioned above, the described example does not limit the general application of the invention so that such selection system may also be used in case of more than four additional services.

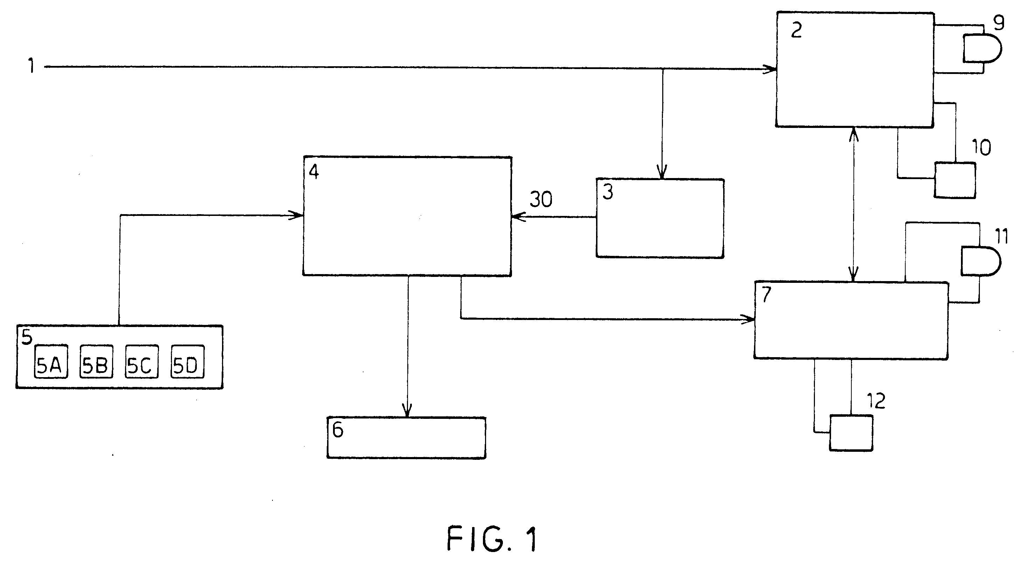

In Fig. 1 a basic block diagram showing specific parts of the telephone set is illustrated. In such diagram the telephone line 1 is connected to the audio circuit 2 for the conversation through the handset; handset 9 and loudspeaker DTR 10 are shown. In order to better explain the principle of the present invention it should be noted that block 5 indicating the keyboard of the telephone services is provided with four keys 5A, 5B, 5C and 5D, each related to a particular service and a specific non-volatile memory in which the codes relative to the actuation of that service are stored. Such memories are contained in call handling block 4 which carries out the real selection by handling the signal from keyboard 5 and block 3 for amplifying and filtering the call warning signal.
The functions of block 3 will be investigated thoroughly afterwards; it should be noted for the present that in the block diagram of Fig. 1 the call handling block 4 is also connected to a liquid crystal display 6 and a voice-actuated audio circuit 7 provided with a voice-actuated microphone 11 and a loudspeaker 12. Such functions (displaying information such as time, dialled telephone number, a.s.o., and enabling the voice-actuated function) which are handled by block 4 indicate how the call handling block 4 can be implemented for performing any other function in addition to the supplementary telephone services provided by the preferred embodiment of the present invention. It should be appreciated that there are at present widespread electronic devices including non-volatile memories to be used for such control functions.
Block 3, the preferred embodiment of which is shown in Fig. 2, operates when the user receives a further telephone call while he is having a phone conversation. A call warning signal can be heard during the conversation by the user. In the embodiment of the present invention the call warning signal is displayed by a LED in addition to being heard during the conversation. This can be carried out by detecting the call warning signal through the following succession of steps:
1) The audio signal transmitted from the exchange is detected by loudspeaker DTR 10. Such signal is fed to block 3.
2) The output of block 3 is fed to call handling block 4 as such block is programmed to detect the output signal of block 3 besides carrying out the selection and storing of the functions.
3) If a signal is present, it will be detected so that a pulse for lighting a LED is generated.
Block 3 of Fig. 1 is formed by an amplification circuit and a selective filter at 425 Hz as shown in Fig. 2. Input signal 1 is the signal of the loudspeaker, and output signal 30 is fed to call handling block 4.
The circuit of block 3 has a high selectivity. In fact the 425 Hz signal is included in the voice band, and voice signals about such frequency could be detected as "call warning signals" if the selectivity is not sufficient.
The circuit diagram of Fig. 2 is given only by way of example of an embodiment of function block 3. In the same way the values of the annexed table 1 are also indicative so that the general basic principle of the present invention is protected.
The selection system for a multifunction telephone set of the present invention is practical and reliable in use. Furthermore, it allows several services such as telephone answering system, automatic answering system, telephone number storing devices, a.s.o., to be installed in the same telephone set.

**TABLE 1**

| VALUES OF THE COMPONENTS OF THE CIRCUIT OF FIG. 2 | |
|---|---|
| 32 | 10 microF/25 V |
| 33 | 27 kOhm |
| 34 | 47 kOhm |
| 35 | 47 kOhm |
| 36 | 153 (MF) |
| 37 | 392 (MF) |
| 38 | 10 microF/10 V |
| 39 | 10 kOhm |
| 40 | + 6 V |
| 41 | BA10324AF |
| 42 | 10 kOhm |
| 13 | 10 microF/10 V |
| 14 | 12 kOhm |
| 15 | BA10324AF |
| 16 | 47 microF/10 V |
| 17 | 10 kOhm |
| 18 | 140 kOhm |
| 19 | 323 (MF) |
| 20 | 323 (MF) |
| 21 | 17 kOhm |
| 22 | 17 kOhm |
| 23 | 10 kOhm |
| 24 | BA10324AF |
| 25 | 323 (MF) |
| 26 | 17 kOhm |
| 27 | + 6 V |
| 28 | 270 kOhm |
| 29 | BA10324AF |
| 31 | 180 kOhm |

## Claims

1. Service selection system for a multifunction telephone set, characterized in that each available service is associated to only one specific control operation as well as one specific non-volatile memory in which the successions of codes relative to the actuation of the corresponding service are stored, such code successions being handled by a call handling block (4) which is capable of storing information regarding the state of the connected devices, detecting the protocol signals in the telephone set, and actuating or not the selection of a specific additional service as a result of such detection.

2. Service selection system for a multifunction telephone set according to the preceding claim, characterized in that a block (3) consisting of an amplification circuit and a selective filter at 425 Hz which detects the audio signal of the call warning from the exchange and feeds such signal to the call handling block (4) which switches on a LED in case the call warning service has been activated.
